# EUROPEAN PATENT APPLICATION

(11) **EP 4 604 100 A1**
(43) Date of publication of application: **20.08.2025**
(21) Application number: 23876536.6
(22) Date of filing: 26.09.2023
(51) Int. Cl.: G09B 9/04, G09B 9/05

(54) **DRIVING SIMULATION METHOD AND APPARATUS, AND VEHICLE, CLOUD SERVER AND STORAGE MEDIUM**

(30) Priority: 14.10.2022 CN 202211263306
(71) Applicant: BYD Company Limited, Shenzhen, Guangdong 518118 (CN)
(72) Inventor: LI, Henghui, Shenzhen, Guangdong 518118 (CN); YANG, Dongsheng, Shenzhen, Guangdong 518118 (CN); WANG, Huan, Shenzhen, Guangdong 518118 (CN); LIANG, Huan, Shenzhen, Guangdong 518118 (CN)
(74) Representative: Mathys & Squire
(86) International application number: PCT/CN2023/121801
(87) International publication number: WO 2024/078332

(57) **Abstract**

Provided are a driving simulation method and apparatus, and a vehicle, a cloud server and a storage medium, wherein the method is applied to a first vehicle, and the first vehicle includes a scenario experience apparatus. The method includes: receiving first scenario data, which is sent by a cloud server and corresponds to a target driving scenario; parsing the first scenario data, and presenting the parsed first scenario data; and acquiring a driving operation, which is triggered by a user on the basis of the presented first scenario data, and sending the driving operation to the cloud server, wherein the driving operation is used for instructing the cloud server to control the moving state of a virtual vehicle in the target driving scenario according to the driving operation and the first scenario data, and for simulating a driving environment by means of a scenario experience apparatus.

## Description

### CROSS-REFERENCE TO RELATED APPLICATIONS

The present disclosure claims priority to Chinese Patent Application No. 202211263306.7 entitled "DRIVING SIMULATION METHOD AND APPARATUS, VEHICLE, AND CLOUD SERVER" filed on October 14, 2022, which is incorporated herein by reference in its entirety.

### FIELD

The present disclosure relates to the technical field of driving simulation, and in particularto a driving simulation method and apparatus, a vehicle, a cloud server and a storage medium.

### BACKGROUND

Traffic accidents not only deal a heavy blowto the families involved, but also seriously affect the stable development of society and the economy. Human factors account for a certain proportion among many accident causes, so it is of great significance to cultivate drivers' driving experiences and driving safety awareness. With the continuous development of electrification and intelligence in automobiles, at present, there are training platforms for drivers' driving ability and emergency response ability, i.e., drivers undergo simulation training on the simulation training platforms, specifically using VR display devices, body posture feedback devices, and control devices to achieve the effect of virtual driving.

However, this approach differs to some extent from the real driving environment, which can create a certain sense of disconnection between the drivers' actual driving experiences and visual perceptions, and cannot provide the drivers with an almost real driving experience. Meanwhile, the simulation training platforms need fixed locations to operate, which is not convenient for practical use and provides a poor driving experience to the drivers.

### SUMMARY

The present disclosure is intended to resolve one of technical problems in the related art at least to some extent.

In orderto resolve the above technical problem, the present disclosure provides a driving simulation method and apparatus, a vehicle, a cloud server and a storage medium.

In a first aspect, the present disclosure provides a driving simulation method applied to a first vehicle including a scenario experience apparatus, and the method includes: first scenario data corresponding to a target driving scenario and sent by a cloud server are received; the first scenario data are parsed and the parsed first scenario data are presented; a driving operation triggered by a user according to the presented first scenario data is acquired, the driving operation is sentto the cloud server, and the driving operation is configured to instruct the cloud server to control a driving state of a virtual vehicle in the target driving scenario according to the driving operation and the first scenario data and simulate a driving environment by the scenario experience apparatus.

In an example, the first scenario data are parsed and the parsed first scenario data are presented, which includes: the first scenario data are parsed to obtain video data, audio data and somatosensory simulation data of the target driving scenario; and the video data, the audio data, and the somatosensory simulation data are presented by the scenario experience apparatus.

In an example, the scenario experience apparatus includes a plurality of window display components, an audio playback component and a somatosensory simulation component; and the video data, the audio data, and the somatosensory simulation data are presented by the scenario experience apparatus, which includes: the video data are displayed by the plurality of window display components and the audio data are played by the audio playback component and the somatosensory simulation data are executed by the somatosensory simulation component.

In an example, before first scenario data corresponding to a target driving scenario and sent by a cloud server are received, the method further includes: a first scenario identifier determined by the user from a preset electronic map is acquired; a scenario data acquisition request is sent to the cloud server according to the first scenario identifier; and the scenario data acquisition request is configured to request the cloud server to acquire the first scenario data of the target driving scenario corresponding to the first scenario identifier.

In an example, the method further includes: a target mode determined by the user from a plurality of preset modes is acquired; the driving operation triggered by the user according to the presented first scenario data is acquired, the driving operation is sentto the cloud server, which includes: in a case where the target mode includes a game mode, the driving operation triggered by the user according to the presented first scenario data is acquired, and the driving operation is sent to the cloud server.

In an example, the method further includes: in a case where the target driving scenario includes a plurality of candidate vehicles, a target vehicle determined by the user from the plurality of candidate vehicles is acquired; and the target vehicle is sent to the cloud server for the cloud server to use the target vehicle as the virtual vehicle.

In an example, the method further includes: in a case where a first scenario information acquisition instruction is triggered, first motion data and first environment perception data of the first vehicle within a first preset time before a target timestamp are acquired from a history record; second motion data and second environment perception data of the first vehicle within a second preset time after the target timestamp are acquired; and the first motion data, the first environment perception data, the second motion data, and the second environment perception data are sent to the cloud server for the cloud server to generate second scenario data of the corresponding driving scenario according to the first motion data, the first environment perception data, the second motion data, and the second environment perception data.

In an example, the first scenario information acquisition instruction is triggered by the following methods: an active triggering method or a passive triggering method; the active triggering method includes the user triggering the first scenario information acquisition instruction; or, in a case where the first vehicle triggers a collision signal, triggering the first scenario information acquisition instruction; the passive triggering method includes in a case where a second vehicle sends a first scenario joint acquisition request to the first vehicle, triggering the first scenario information acquisition instruction if the user triggers a permission instruction for responding to the first scenario joint acquisition request; the second vehicle is the vehicle located within a preset range of the position of the first vehicle; and the first scenario joint acquisition request is configured to request the first vehicle to acquire the first motion data, the first environment perception data, the second motion data, and the second environment perception data.

In an example, the method further includes: in a case where the first scenario information acquisition instruction is triggered by the active triggering method, a second scenario joint acquisition request is sent to the second vehicle; wherein the second scenario joint acquisition request is configured to request the second vehicle to acquire third motion data and third environment perception data of the second vehicle within a third preset time before the target timestamp, and fourth motion data and fourth environment perception data of the second vehicle within a fourth preset time after the target timestamp.

In an example, in a case where the first scenario information acquisition instruction is triggered by the active triggering method, the target timestamp includes the current time; and in a case where the first scenario information acquisition instruction is triggered by the passive triggering method, the target timestamp includes the time when the second vehicle triggers the first scenario joint acquisition request.

In an example, the method further includes: driving navigation information input by the user is acquired; the driving navigation information is sent to the cloud server for the cloud server to determine a driving path of the first vehicle according to the driving navigation information, and in a case where the driving path includes a preset driving scenario, a second scenario identifier corresponding to the preset driving scenario is sent to the first vehicle.

In a second aspect, the present disclosure provides a driving simulation method applied to a cloud server, and the method includes: first scenario data corresponding to a target driving scenario are sent to a first vehicle for the first vehicle to parse the first scenario data and present the parsed first scenario data; and in a case where a driving operation sent by the first vehicle is received, a driving state of a virtual vehicle in the target driving scenario is controlled according to the driving operation and the first scenario data, and a driving environment is simulated by a scenario experience apparatus of the first vehicle; and the driving operation is the driving operation acquired by the first vehicle and triggered by a user according to the first scenario data presented by the first vehicle.

In an example, the first scenario data corresponding to a target driving scenario are sent to a first vehicle, which includes: a first scenario identifier sent by the first vehicle is received; the target driving scenario corresponding to the first scenario identifier is determined according to the first scenario identifier; the first scenario data correspondingto the target driving scenario are acquired; and the first scenario data are sent to the first vehicle.

In an example, the method further includes: a target vehicle sent by the first vehicle is received; in a case where the target driving scenario includes a plurality of candidate vehicles, the target vehicle is the vehicle determined by the user from the plurality of candidate vehicles and acquired by the first vehicle; and the target vehicle is used as the virtual vehicle in the target driving scenario.

In an example, the method further includes: first motion data, first environment perception data, second motion data, and second environment perception data sent by the first vehicle are received; wherein the first motion data are the motion data of the first vehicle within a first preset time before a target timestamp acquired from a history record by the first vehicle in a case where a first scenario information acquisition instruction is triggered; the first environment perception data are the environment perception data of the first vehicle within the first preset time before the target timestamp acquired from the history record by the first vehicle in a case where the first scenario information acquisition instruction is triggered; the second motion data are the motion data of the first vehicle within a second preset time after the target timestamp acquired by the first vehicle; the second environment perception data are the environment perception data of the first vehicle within the second preset time after the target timestamp acquired by the first vehicle; and second scenario data of the corresponding driving scenario are generated according to the first motion data, the first environment perception data, the second motion data, and the second environment perception data.

In an example, the second scenario data of the corresponding driving scenario are generated according to the first motion data, the first environment perception data, the second motion data, and the second environment perception data, which includes: vehicle dynamics modeling and three-dimensional scenario modeling are performed on the driving scenario according to the first motion data, the first environment perception data, the second motion data, and the second environment perception data to obtain a modeled three-dimensional model; and render processing is performed on the modeled three-dimensional model to obtain the second scenario data of the driving scenario.

In an example, the method further includes: in a case where the first motion data, the first environment perception data, the second motion data, and the second environment perception data sent by the first vehicle are received, if third motion data, third environment perception data, fourth motion data, and fourth environment perception data sent by a second vehicle are received, time alignment processing is performed on the first motion data, the first environment perception data, the second motion data, the second environment perception data, the third motion data, the third environment perception data, the fourth motion data, and the fourth environment perception data to obtain first vehicle data of the first vehicle and second vehicle data of the second vehicle; the starting time and the ending time of the first vehicle data and the second vehicle data are the same; and third scenario data of the driving scenario are generated according to the first vehicle data and the second vehicle data.

In an example, the method further includes: determining whether a modeling effect of the driving scenario satisfies a preset effect according to the first vehicle data and the second vehicle data; and third scenario data of the driving scenario are generated according to the first vehicle data and the second vehicle data, which includes: in a case where it is determined that the modeling effect satisfies the preset effect, the third scenario data of the driving scenario are generated according to the first vehicle data and the second vehicle data.

In an example, the determining whether a modeling effect of the driving scenario satisfies a preset effect includes: a time difference between the starting time and the ending time is determined, and in a case where the time difference is greater than or equal to a preset time difference, it is determined that the modeling effect of the driving scenario satisfies the preset effect; or, a first number of acquisition viewing angles of the first vehicle and a second number of acquisition viewing angles of the second vehicle are determined according to the first vehicle data and the second vehicle data, and in a case where the first number of the acquisition viewing angles is greater than or equal to a preset number of acquisition viewing angles and the second number of acquisition viewing angles is greater than or equal to a preset number of acquisition viewing angles, it is determined that the modeling effect of the driving scenario satisfies the preset effect.

In an example, the first environment perception data and the second environment perception data include first position information of the first vehicle, and the method further includes: after the second scenario data of the driving scenario are generated, the driving scenario is labeled to obtain a third scenario identifier of the driving scenario; and the third scenario identifier is marked at the position corresponding to the first position information in the preset electronic map.

In an example, the method further includes: driving navigation information sent by the first vehicle is received; a driving path of the first vehicle is determined according to the driving navigation information; and in a case where the driving path includes a preset driving scenario, a second scenario identifier corresponding to the preset driving scenario is sent to the first vehicle for the first vehicle to present the second scenario identifier.

In a third aspect, the present disclosure provides a driving simulation apparatus applied to a first vehicle including a scenario experience apparatus, and the driving simulation apparatus includes: a receiving module configured to receive first scenario data corresponding to a target driving scenario and sent by a cloud server; a presenting module configured to parse the first scenario data and present the parsed first scenario data; an acquisition module configured to acquire a driving operation triggered by a user according to the presented first scenario data, send the driving operation to the cloud server, and the driving operation configured to instruct the cloud server to control a driving state of a virtual vehicle in the target driving scenario according to the driving operation and the first scenario data and simulate a driving environment by the scenario experience apparatus.

In an example, the presenting module is configured to parse the first scenario data to obtain video data, audio data and somatosensory simulation data of the target driving scenario; and present the video data, the audio data, and the somatosensory simulation data by the scenario experience apparatus.

In an example, the scenario experience apparatus includes a plurality of window display components, an audio playback component and a somatosensory simulation component; and the presenting module is configured to display the video data by the plurality of window display components and play the audio data by the audio playback component and execute the somatosensory simulation data by the somatosensory simulation component.

In an example, the acquisition module is further configured to acquire a first scenario identifier determined by the user from a preset electronic map; the acquisition module is further configured to send a scenario data acquisition request to the cloud server according to the first scenario identifier; and the scenario data acquisition request is configured to request the cloud server to acquire the first scenario data of the target driving scenario corresponding to the first scenario identifier.

In an example, the acquisition module is further configured to acquire a target mode determined by the user from a plurality of preset modes; and the acquisition module is configured to acquire the driving operation triggered by the user according to the presented first scenario data and send the driving operation to the cloud server in a case where the target mode includes a game mode.

In an example, the acquisition module is further configured to, in a case where the target driving scenario includes a plurality of candidate vehicles, acquire a target vehicle determined by the user from the plurality of candidate vehicles; and send the target vehicle to the cloud server for the cloud server to use the target vehicle as the virtual vehicle.

In an example, the acquisition module is further configured to acquire first motion data and first environment perception data of the first vehicle within a first preset time before a target timestamp from a history record in a case where a first scenario information acquisition instruction is triggered; and acquire second motion data and second environment perception data of the first vehicle within a second preset time after the target timestamp; and send the first motion data, the first environment perception data, the second motion data, and the second environment perception data to the cloud server for the cloud server to generate second scenario data of the corresponding driving scenario according to the first motion data, the first environment perception data, the second motion data, and the second environment perception data.

In an example, the first scenario information acquisition instruction is triggered by the following methods: an active triggering method or a passive triggering method; the active triggering method includes the user triggering the first scenario information acquisition instruction; or, in a case where the first vehicle triggers a collision signal, triggering the first scenario information acquisition instruction; the passive triggering method includes, in a case where a second vehicle sends a first scenario joint acquisition request to the first vehicle, triggering the first scenario information acquisition instruction if the user triggers a permission instruction for responding to the first scenario joint acquisition request; the second vehicle is the vehicle located within a preset range of the position of the first vehicle; and the first scenario joint acquisition request is configured to request the first vehicle to acquire the first motion data, the first environment perception data, the second motion data, and the second environment perception data.

In an example, the apparatus further includes: a request module configured to send a second scenario joint acquisition request to the second vehicle in a case where the first scenario information acquisition instruction is triggered by the active triggering method; wherein the second scenario joint acquisition request is configured to request the second vehicle to acquire third motion data and third environment perception data of the second vehicle within a third preset time before the target timestamp, and fourth motion data and fourth environment perception data of the second vehicle within a fourth preset time after the target timestamp.

In an example, in a case where the first scenario information acquisition instruction is triggered by the active triggering method, the target timestamp includes the current time; and in a case where the first scenario information acquisition instruction is triggered by the passive triggering method, the target timestamp includes the time when the second vehicle triggers the first scenario joint acquisition request.

In an example, the acquisition module is further configured to acquire driving navigation information input by the user; send the driving navigation information to the cloud server for the cloud serverto determine a driving path ofthe first vehicle accordingto the driving navigation information, and in a case where the driving path includes a preset driving scenario, send a second scenario identifier corresponding to the preset driving scenario to the first vehicle.

In a fourth aspect, the present disclosure provides a driving simulation apparatus applied to a cloud server, and the driving simulation apparatus includes: a sending module configured to send first scenario data corresponding to a target driving scenario to a first vehicle for the first vehicle to parse the first scenario data and present the parsed first scenario data; and a control module configured to, in a case where a driving operation sent by the first vehicle is received, control a driving state of a virtual vehicle in the target driving scenario according to the driving operation and the first scenario data, and simulate a driving environment by a scenario experience apparatusofthe first vehicle; and the driving operation being the driving operation acquired by the first vehicle and triggered by a user according to the first scenario data presented by the first vehicle.

In an example, the sending module is configured to receive a first scenario identifier sent by the first vehicle; determine the target driving scenario correspondingto the first scenario identifier according to the first scenario identifier; acquire the first scenario data corresponding to the target driving scenario; and send the first scenario data to the first vehicle.

In an example, the apparatus further includes: a determining module configured to receive a target vehicle sent by the first vehicle; in a case where the target driving scenario includes a plurality of candidate vehicles, the target vehicle being the vehicle determined by the user from the plurality of candidate vehicles and acquired by the first vehicle; and use the target vehicle as the virtual vehicle in the target driving scenario.

In an example, the determining module is further configured to receive first motion data, first environment perception data, second motion data, and second environment perception data sent by the first vehicle; wherein the first motion data are the motion data of the first vehicle within a first preset time before a target timestamp acquired from a history record by the first vehicle in a case where a first scenario information acquisition instruction is triggered; the first environment perception data are the environment perception data of the first vehicle within the first preset time before the target timestamp acquired from the history record by the first vehicle in a case where the first scenario information acquisition instruction is triggered; the second motion data are the motion data of the first vehicle within a second preset time after the target timestamp acquired by the first vehicle; the second environment perception data are the environment perception data of the first vehicle within the second preset time after the target timestamp acquired by the first vehicle; and generate second scenario data of the corresponding driving scenario according to the first motion data, the first environment perception data, the second motion data, and the second environment perception data.

In an example, the determining module is configured to perform vehicle dynamics modeling and three-dimensional scenario modeling on the driving scenario according to the first motion data, the first environment perception data, the second motion data, and the second environment perception data to obtain a modeled three-dimensional model; and perform render processing on the modeled three-dimensional model to obtain the second scenario data of the driving scenario.

In an example, the determining module is further configured to, in a case where the first motion data, the first environment perception data, the second motion data, and the second environment perception data sent by the first vehicle are received, if third motion data, third environment perception data, fourth motion data, and fourth environment perception data sent by a second vehicle are received, perform time alignment processing on the first motion data, the first environment perception data, the second motion data, the second environment perception data, the third motion data, the third environment perception data, the fourth motion data, and the fourth environment perception data to obtain first vehicle data of the first vehicle and second vehicle data of the second vehicle; the starting time and the ending time of the first vehicle data and the second vehicle data are the same; and generate third scenario data of the driving scenario according to the first vehicle data and the second vehicle data.

In an example, the determining module is further configured to determine whether a modeling effect of the driving scenario satisfies a preset effect according to the first vehicle data and the second vehicle data; and the determining module is further configured to generate the third scenario data of the driving scenario according to the first vehicle data and the second vehicle data in a case where it is determined that the modeling effect satisfies the preset effect.

In an example, the determining module is configured to determine a time difference between the starting time and the ending time, and determine that the modeling effect of the driving scenario satisfies the preset effect in a case where the time difference is greater than or equal to a preset time difference; or, determine a first number of acquisition viewing angles of the first vehicle and a second number of acquisition viewing angles of the second vehicle according to the first vehicle data and the second vehicle data, and determine that the modeling effect of the driving scenario satisfies the preset effect in a case where the first number of the acquisition viewing angles is greater than or equal to a preset number of acquisition viewing angles and the second number of acquisition viewing angles is greater than or equal to a preset number of acquisition viewing angles.

In an example, the first environment perception data and the second environment perception data include first position information of the first vehicle, and the apparatus further includes: a marking module configured to label the driving scenario to obtain a third scenario identifier of the driving scenario after generating the second scenario data of the driving scenario; and mark the third scenario identifier at the position corresponding to the first position information in the preset electronic map.

In an example, the determining module is further configured to receive driving navigation information sent by the first vehicle; and determine a driving path of the first vehicle according to the driving navigation information; and the sending module is further configured to, in a case where the driving path includes a preset driving scenario, send a second scenario identifier corresponding to the preset driving scenario to the first vehicle for the first vehicle to present the second scenario identifier.

In a fifth aspect, the present disclosure provides a vehicle including the driving simulation apparatus according to the above third aspect.

In a sixth aspect, the present disclosure provides a cloud server including the driving simulation apparatus according to the above fourth aspect.

In a seventh aspect, the present disclosure provides a non-transitory computer-readable storage medium, storing a computer program which, when executed by a processor, implements steps of the driving simulation method according to the first aspect of the present disclosure or implements steps of the driving simulation method according to the second aspect of the present disclosure.

According to the above technical solution, first, the first scenario data corresponding to the target driving scenario and sent by the cloud server are received; then the first scenario data are parsed and the parsed first scenario data are presented; next the driving operation triggered by a user accordingto the presented first scenario data is acquired, the driving operation is sent to the cloud server, and the driving operation is configured to instruct the cloud server to control a driving state of a virtual vehicle in the target driving scenario according to the driving operation and the first scenario data and simulatethe driving environment by the scenario experience apparatus. As described above, by receiving the first scenario data corresponding to the target driving scenario and sent by the cloud server, and parsing and presenting the first scenario data in the first vehicle, the user can directly experience and practice in the first vehicle without going to fixed locations to experience and practice, and without being limited by the fixed locations. Meanwhile, by simulating the driving environment by the scenario experience apparatus inside the first vehicle, the user can experience simulated driving in a real driving space, and the user experience immersion is further enhanced.

Additional aspects and advantages of the present disclosure will be presented in part in the following description, and in part will become apparent from the following description, or learned by the practice of the present disclosure.

### BRIEF DESCRIPTION OF THE DRAWINGS

The above and/or additional aspects and advantages of the present disclosure will become apparent and readily understood from the following description of examples taken in conjunction with the accompanying drawings.

The accompanying drawings are included to provide a further understanding of the disclosure and constitute a part of the description, serve to explain the disclosure, together with the following detailed examples, but do not constitute limitations on the present disclosure. In the drawings:
FIG. 1 is a flowchart of a driving simulation method according to an exemplary example;
FIG. 2 is a flowchart of another driving simulation method according to an exemplary example;
FIG. 3 is a flowchart of another driving simulation method according to an exemplary example;
FIG. 4 is a flowchart of a driving simulation method according to an exemplary example;
FIG. 5 is a flowchart of a driving simulation method according to an exemplary example;
FIG. 6 is a block diagram of a driving simulation apparatus according to an exemplary example;
FIG. 7 is a block diagram of another driving simulation apparatus according to an exemplary example;
FIG. 8 is a block diagram of a driving simulation apparatus according to an exemplary example;
FIG. 9 is a block diagram of another driving simulation apparatus according to an exemplary example;
FIG. 10 is a block diagram of another driving simulation apparatus according to an exemplary example;
FIG. 11 is a block diagram of an electronic device according to an exemplary example;
FIG. 12 is a block diagram of another electronic device according to an exemplary example.

### DETAILED DESCRIPTION

The specific examples of the present disclosure are described in detail below in conjunction with the accompanying drawings. It should be understood that the specific examples described herein are only for illustration and explanation of the present disclosure and are not intended to limit the present disclosure.

It will be appreciated that all of the actions of acquiring signals, information or data in the present disclosure are performed on the premise of complying with the corresponding data protection laws and policies of the local country and obtaining authorization from the corresponding device owner.

In the description and claims of the present disclosure and in the drawings above, the terms "first", "second", and the like are used for distinguishing similar objects and are not necessarily understood as a specific order or sequence. In addition, in the description with reference to the drawings, the same reference numerals in different drawings denote the same elements.

Before introducing the driving simulation method and apparatus, the vehicle, the cloud server, and the storage medium provided in the present disclosure, the application scenario involved in each example of the present disclosure is first introduced. The present disclosure is applied in a scenario of simulated driving, with the gradual increase in the number of vehicles traveling on the road at present, the incidence of traffic accidents is also gradually increasing, and the traffic accidents not only deal a heavy blowto the families involved, but also seriously affect the stable development of society and the economy. Therefore, driving safety has always been the focus of common concern of society and individuals. Human factors account for a certain proportion among many accident causes, which often include: 1) insufficient driving experience on the road, and drivers can't calmly handle sudden traffic situations; 2) driving without adhering to traffic regulations, resulting in traffic accidents; 3) a weak awareness of driving safety, frequent drunk driving and driving while fatigued. Therefore, it is of great significance to cultivate drivers' driving experience and driving safety awareness.

With the continuous development of electrification and intelligence in automobiles, three-dimensional modeling algorithms, automotive dynamics simulation, VR technology, virtual simulation and data transmission technology continue to mature. At present, there are training platforms for drivers' driving ability and emergency response ability, i.e., drivers undergo simulation training on the simulation training platform, specifically using VR display devices, body posture feedback devices, and control devices to achieve the effect of virtual driving.

However, this approach differs to some extent from the real driving environment, which can create a certain sense of disconnection between the driver's actual driving experience and visual perception, and cannot provide the drivers with an almost real driving experience. Meanwhile, the simulation training platforms need fixed locations to operate, which is not convenient for practical use and provides a poor driving experience to the drivers.

In order to solve the above technical problem, the present disclosure provides a driving simulation method and apparatus, a vehicle, a cloud server and a storage medium. By receiving the first scenario data correspondingto the target driving scenario and sent by the cloud server, and parsing and presenting the first scenario data in the first vehicle, the user can directly experience and practice in the first vehicle without going to fixed locations to experience and practice, and without being limited by the fixed locations. Meanwhile, by simulating the driving environment by the scenario experience apparatus inside the first vehicle, the user can experience simulated driving in a real driving space, and the user experience immersion is further enhanced.

Specific examples of the present invention will be described in detail below with reference to the accompanying drawings.

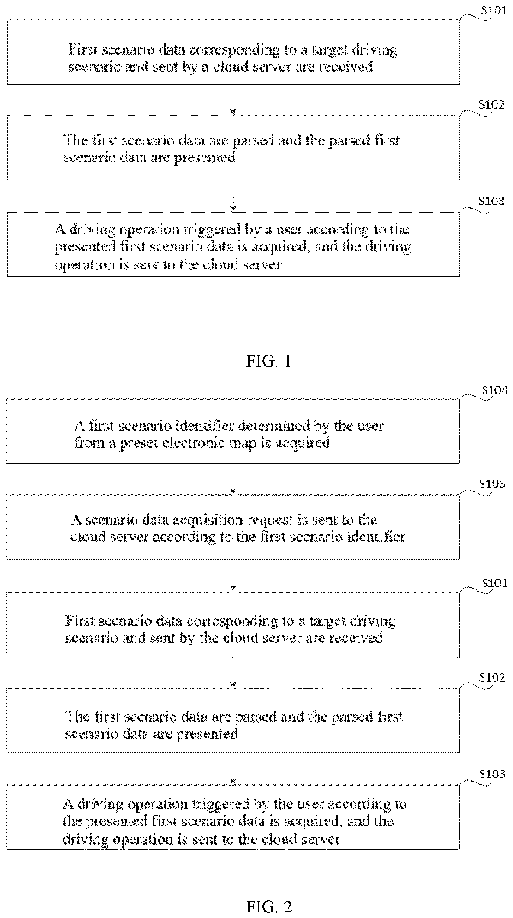

FIG. 1 is a flowchart ofa driving simulation method according to an exemplary example, the method is applied to a first vehicle, the first vehicle includes a scenario experience apparatus, and the method may include the following steps.

In step S101, first scenario data corresponding to a target driving scenario and sent by a cloud server are received.

The first scenario data may be the first scenario data correspondingto the target driving scenario obtained by the cloud server performing modeling processing on a large amount of actual scenario information collected in advance for the target driving scenario. It should be noted that modeling processing by the large amount of actual scenario information can be realized by a method in the related art, and details are not described herein again.

In step S102, the first scenario data are parsed and the parsed first scenario data are presented.

The parsed first scenario data may be presented by a scenario experience apparatus of the first vehicle.

For example, in orderto simulate the target driving scenario in the first vehicle, the first scenario data often include a plurality of types of data related to the target driving scenario. In order to facilitate the first vehicle to present the different types of data, in the example, after receiving the first scenario data, the first scenario data may be parsed to obtain one or more of video data, audio data, and somatosensory simulation data of the target driving scenario. The video data are the scenario video data of the target driving scenario to simulate the driving environment for the user in a visual way. The audio data are the scenario audio data of the target driving scenario to simulate the driving environment for the user in an auditory way. The somatosensory simulation data are the driving somatosensory simulation data of the target driving scenario to simulate the driving environment for the user in a tactile way. In this way, through various sensory experiences, the user's simulated driving experience ofthe target driving scenario is deepened, and the user's experience is closer to the real experience.

Further, the video data, the audio data, and the somatosensory simulation data may be presented by the scenario experience apparatus of the first vehicle. For example, if the scenario experience apparatus includes a plurality of window display components, an audio playback component and a somatosensory simulation component, the video data are displayed by the plurality of window display components and the audio data are played by the audio playback component and the somatosensory simulation data are executed by the somatosensory simulation component. The window display component may include driving glass of the vehicle (such as a front windshield, a rear windshield, windows on both sides of the vehicle, etc.), a rearview mirror, etc. That is, the video data of the target driving scenario may be displayed on the window display component of the first vehicle by the glass display technology. Displaying the video data by the window display component can provide the user with a more realistic visual and spatial experience. By playing the audio data by the audio playback component, the sound (such as rain sound, brake sound, accelerator sound, horn sound, etc.) of the virtual vehicle during driving in the target driving scenario can be simulated in the first vehicle, thereby further providing the users with a more immersive driving experience. The somatosensory simulation component may include, for example, an electromagnetic suspension device and an auxiliary steering device, and the electromagnetic suspension device is configured to generate an effect of vibration and can simulate a bumpy feeling of the virtual vehicle during driving. The auxiliary steering device is configured to output resistance opposite to the rotation direction of the steering wheel, and can simulate the resistance generated when the steering wheel is turned during driving. In this way, the target driving scenario can be simulated on the first vehicle by the scenario experience apparatus, and the user can experience the simulated driving without going to fixed locations, and the user's experience is greatly improved. Meanwhile, simulated driving in the driving space inside the vehicle can provide the user with a more realistic driving experience.

In step S103, a driving operation triggered by a user according to the presented first scenario data is acquired, and the driving operation is sent to the cloud server.

The driving operation may include, for example, a control operation by the user on control components of the vehicle, the control components include, for example, a steering wheel, an accelerator pedal, a brake pedal, a light, etc., and the driving operation may include, for example, the control operation on the steering angle of the steering wheel, the control operation on the opening of the accelerator pedal, the control operation on the opening of the brake pedal, the control operation on the light, etc.. The user can generate a corresponding driving operation by the above control components. The driving operation is configured to instruct the cloud serverto control a driving state of a virtual vehicle in the target driving scenario according to the driving operation and the first scenario data and simulate a driving environment by the scenario experience apparatus. That is, in the present example, after receiving the driving operation sent by the first vehicle, the cloud server may control the driving state of the virtual vehicle in the target driving scenario according to the driving operation and the first scenario data. Meanwhile, the driving environment can be simulated by the scenario experience apparatus of the first vehicle, the driving state of the virtual vehicle is fed back to the first vehicle, and the driving state of the virtual vehicle is presented by the first vehicle. For example, if the user depresses the accelerator pedal, the cloud server may determine the vehicle speed of the virtual vehicle at the next time according to the accelerator pedal opening and the current vehicle speed of the virtual vehicle in the first scenario data, thereby controlling the driving state of the virtual vehicle in the target driving scenario. In another example, if the user turns the steering wheel to the left by a certain angle, then the cloud server may simulate the flatness of the roadway to be traveled by the virtual vehicle according to the angle of rotation of the steering wheel and the first scenario data. If it is determined that the flatness of the road section which the wheels of the virtual vehicle enter is poor after the steering wheel is rotated by the rotation angle, the degree of jounce of the road surface to be driven can be simulated by the somatosensory simulation component in the scenario experience apparatus according to the flatness of the road surface to be driven.

In addition, sending the driving operation to the cloud server may include sending the driving operation to the cloud server by relay transmission devices, such as 5G (5th Generation Mobile Communication Technology) base stations or V2I (Vehicle to Infrastructure) devices.

According to the above method, by receiving the first scenario data corresponding to the target driving scenario and sent by the cloud server, and parsing and presenting the first scenario data in the first vehicle, the user can directly experience and practice in the first vehicle without going to fixed locations to experience and practice, and without being limited by the fixed locations. Meanwhile, by simulatingthe driving environment by the scenario experience apparatus inside the first vehicle, the user can experience simulated driving in a real driving space, and the user experience immersion is further enhanced.

In some examples, in order to improve the user's usage experience, the user may freely select the target driving scenario that the user wants to experience according to his needs. Thus, before receiving the first scenario data corresponding to the target driving scenario sent by the cloud server, as shown in FIG. 2, the method may further include the following steps.

In step S104, a first scenario identifier determined by the user from a preset electronic map is acquired.

The first scenario identifier is identification information of the target driving scenario, and the identification information may include, for example, position information, name information, scenario content, scenario identifiers (such as dangerous driving, emergency condition, driving accident, etc.) of the target driving scenario. The cloud server may associate the driving scenario with the preset electronic map in advance according to the identification information of the different driving scenarios, i.e., the different driving scenarios are marked at corresponding positions in the preset electronic map according to the position information of each driving scenario, thereby facilitating the user to determine the first scenario identifier from the plurality of scenario identifiers in the preset electronic map.

In step S105, a scenario data acquisition request is sent to the cloud server according to the first scenario identifier.

The scenario data acquisition request is configured to request the cloud server to acquire the first scenario data of the target driving scenario corresponding to the first scenario identifier. After receiving the first scenario identifier sent by the first vehicle, the cloud server may determine the target driving scenario corresponding to the first scenario identifier according to the plurality of pre-stored driving scenarios and the scenario identifier of each driving scenario, and send the first scenario data corresponding to the target driving scenario to the first vehicle.

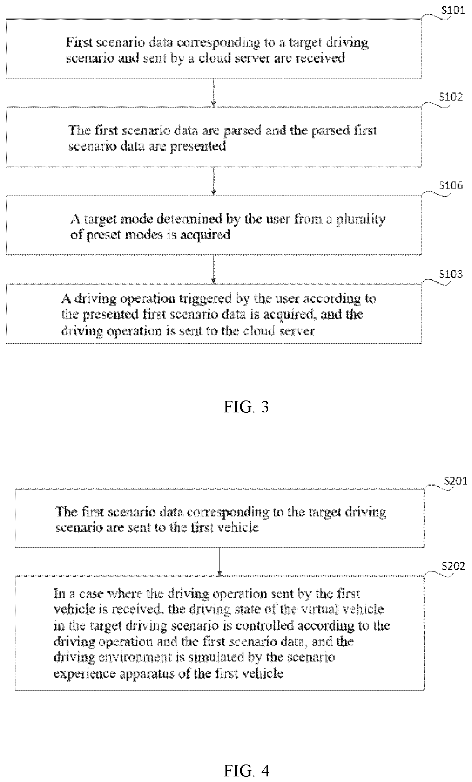

Considering some driving scenarios, such as the driving scenario which is identified as a driving accident, the greater demand of users may be to learn and improve their driving skills by restoring the driving scenario, rather than actually operating the virtual vehicle in the driving scenario. Therefore, in some examples, as shown in FIG. 3, the method may further include the following steps.

In step S106, a target mode determined by the user from a plurality of preset modes is acquired.

The preset mode may include, for example, a game mode and a playback mode. Specifically, in the game mode, the user can control the virtual vehicle in the target driving scenario by triggering the driving operation of the first vehicle, thereby experiencing simulated driving. In the playback mode, the user can restore the driving process of the target driving scenario by the scenario experience apparatus in the first vehicle, thereby learning driving experience and cultivating driving safety awareness by reviewing the target driving scenario experience apparatus.

In step S103, the driving operation triggered by the user according to the presented first scenario data is acquired, and the driving operation is sent to the cloud server, which includes: in a case where the target mode includes the game mode, the driving operation triggered by the user according to the presented first scenario data is acquired, and the driving operation is sent to the cloud server.

In addition, in a case where the target mode includes the playback mode, the first vehicle only parses and presents the first scenario data. In a case where the target mode includes the game mode, the first vehicle not only parses and presents the first scenario data, but also acquires the driving operation triggered by the user according to the presented first scenario data in real time, and sends the driving operation to the cloud server in a case where the driving operation is acquired. In general, in a case where the target mode includes the playback mode, the first vehicle only parses and presents the first scenario data, and does not acquire the driving operation triggered by the user according to the presented first scenario data in real time. That is, if the user triggers the driving operation at this time, the first vehicle does not send the driving operation to the cloud server, and does not control the driving state of the virtual vehicle in the target driving scenario according to the driving operation.

Since most current driving training platforms are based on human-computer interaction, they are unable to simulate the driving state of mutual influence and game during multiple vehicles driving on a real road and facing an emergency condition. Real driving is mostly a driving experience involving multiple vehicles. At present, a large number of training platforms train users' driving ability according to the constructed driving scenario, and this training is often one-way. Therefore, it is impossible to give users a more realistic sense of participation in traffic driving. Therefore, in some examples, the method may further include: first, in a case where the target driving scenario includes a plurality of candidate vehicles, acquiring a target vehicle determined by the user from the plurality of candidate vehicles, and sending the target vehicle to the cloud server for the cloud server to use the target vehicle as the virtual vehicle.

Thatis, the target driving scenario may include a plurality of candidate vehicles to be selected by the user, and if the user wants to connect with other users online at this time, the user can match other users who are online at the same time and selected in the target driving scenario by online matching, and can select the target vehicle from the plurality of candidate vehicles, and the other user can also determine the corresponding vehicle from the plurality of candidate vehicles in their presented target driving scenario. In this way, the user can simulate driving in the same target driving scenario together with other users, and the user's driving experience is further improved.

In addition, in order to facilitate the operation and use of the user, the scenario data of the relevant driving scenario can be accessed and acquired on any networked terminal (such as a mobile phone, a tablet computer, a desktop computer, etc.) by logging in to the same account. Therefore, it is convenient for users to learn these driving scenarios (especially driving scenarios identified as dangerous driving scenarios) anytime and anywhere to cultivate the awareness of safe driving and influence users to develop good driving habits. For example, the user may select a driving scenario which they want to learn by viewing the scenario identifiers marked in the preset electronic map on any networked terminal.

At present, the driving scenarios adopted by most driving training platforms are mostly artificially designed or artificially reconstructed based on real scenarios, and the driving training platforms lack a rich variety of scenarios that can simulate driving and cannot cover more real driving scenarios. This also leads to the limitation of training samples when users undergo simulated driving training on the driving training platforms. Therefore, in some examples, the driving scenarios may be collected in real time during the daily driving process of the first vehicle, and the diversity of training samples is enriched. In particular, the method includes the following steps.

S1. In a case where a first scenario information acquisition instruction is triggered, first motion data and first environment perception data ofthe first vehicle within a first preset time before a target timestamp are acquired from a history record.

The first preset time may be any value from 30 seconds to 60 seconds, for example, the first preset time may be 30 seconds, 40 seconds, 50 seconds, or 60 seconds.

In this step, the first scenario information acquisition instruction is triggered by the following methods: an active triggering method or a passive triggering method.

The active triggering method includes the user triggering the first scenario information acquisition instruction; or, in a case where the first vehicle triggers a collision signal, triggering the first scenario information acquisition instruction.

The collision signal is configured to characterize that the first vehicle has a collision accident. For example, in a case where the first vehicle collides with another object, the collision signal of the first vehicle is triggered. At this time, in order to record the collision accident of the first vehicle in time, the first scenario information acquisition instruction may be triggered to record the scenario information of the first vehicle at the time of triggering the collision signal.

It can be understood that in order to achieve a better spatial modeling effect, when acquiring the scenario information in the early stage, it is often necessary to acquire the scenario information from multiple different acquisition viewing angles (such as the acquisition viewing angles of the different vehicles) for the same scenario. Therefore, in the example, in order to enable the subsequent cloud server to achieve a better modeling effect, in a case where the first scenario information acquisition instruction is triggered by the active triggering method, a second scenario joint acquisition request is sent to the second vehicle, thereby requesting the second vehicle to jointly record the current scenario to obtain the scenario information acquired by the different vehicles in the same scenario.

The second vehicle is the vehicle located within a preset range of the position of the first vehicle. Further, the second vehicle may be the vehicle equipped with the same in-vehicle driving simulation system as the first vehicle, when differentusers log in to the in-vehicle driving simulation system through the first vehicle and the second vehicle at the same time, if the second vehicle is within the preset range of the position of the first vehicle at this time, the first vehicle may send the second scenario joint acquisition request to the second vehicle in a case where the first scenario information acquisition instruction is triggered by the active triggering method.

In addition, the second scenario joint acquisition request is configured to request the second vehicle to acquire third motion data and third environment perception data of the second vehicle within a third preset time before the target timestamp, and fourth motion data and fourth environment perception data of the second vehicle within a fourth preset time after the target timestamp.

The third preset time may be any value from 30 seconds to 60 seconds, for example, the third preset time may be 30 seconds, 40 seconds, 50 seconds, or 60 seconds. Likewise, the fourth preset time may be any value from 30 seconds to 60 seconds, for example, the fourth preset time may be 30 seconds, 40 seconds, 50 seconds, or 60 seconds.

The passive triggering method includes in a case where the second vehicle sends a first scenario joint acquisition request to the first vehicle, triggering the first scenario information acquisition instruction if the user triggers a permission instruction for responding to the first scenario joint acquisition request.

It can be understood that if the second vehicle triggers the second scenario information acquisition instruction, and the second scenario information acquisition instruction is also triggered by the active triggering method, likewise, in orderto acquire as many acquisition viewing angles as possible, the second vehicle may send a first scenario joint acquisition request to the first vehicle. The first scenario joint acquisition request is configured to request the first vehicle to acquire the first motion data, the first environment perception data, the second motion data, and the second environment perception data.

In some examples, if the first vehicle receives the first scenario joint acquisition request sent by the second vehicle, the user may agree to the first scenario joint acquisition request or reject the first scenario joint acquisition request. If the user agrees to the first scenario joint acquisition request, the permission instruction for responding to the first scenario joint acquisition requestmay be triggered. If the user rejects the first scenario joint acquisition request or does not respond to the first scenario joint acquisition request within a preset waiting time, the first scenario joint acquisition request automatically ends, and the first vehicle does not acquire the first motion data, the first environment perception data, the second motion data, and the second environment perception data.

It should be noted that the first vehicle and the second vehicle may establish a communication connection in advance, and for example, in a case where the second vehicle appears within a preset range of the position of the first vehicle, the first vehicle and the second vehicle may establish the communication connection, thereby facilitating information communication between the first vehicle and the second vehicle.

Further, in a case where the first scenario information acquisition instruction is triggered by the active triggering method, the target timestamp includes the current time; and in a case where the first scenario information acquisition instruction is triggered by the passive triggering method, the target timestamp includes the time when the second vehicle triggers the first scenario joint acquisition request, i.e. the time when the second vehicle triggers the second scenario information acquisition instruction.

It should be noted that the motion data are configured to characterize vehicle operation data of the vehicle at the target time, and may include the vehicle operation data that can be monitored by various sensors of the vehicle, such as the acceleration, the vehicle speed, the brake pedal opening, the accelerator pedal opening, the radar monitoring data, and the steering angle of the steering wheel. The environment perception data are configured to characterize the vehicle environment data of the vehicle at the target time, such as the image and video data of the environment in which the vehicle is located acquired by a plurality of image and video acquisition devices on the vehicle, the time information of acquiring the image and video data, the position information of the vehicle when the vehicle acquires the image and video data, and the like.

For example, the first motion data represent the vehicle operation data of first vehicle within the first preset time before the target timestamp. The first environment perception data represent the vehicle environment data of first vehicle within the first preset time before the target timestamp.

S2. The second motion data and second environment perception data of the first vehicle within a second preset time after the target timestamp are acquired.

The second preset time may be any value from 30 seconds to 60 seconds, for example, the second preset time may be 30 seconds, 40 seconds, 50 seconds, or 60 seconds.

S3. The first motion data, the first environment perception data, the second motion data, and the second environment perception data are sent to the cloud server.

The cloud server may generate second scenario data of the corresponding driving scenario according to the first motion data, the first environment perception data, the second motion data, and the second environment perception data.

In some examples, in order to further improve the user's usage experience, a related driving scenario may be pushed to the user according to the navigation information of the user, for example, the related driving scenario may be fused with the preset electronic map to be displayed in the navigation route corresponding to the navigation information of the user. At this time, if a dangerous driving scenario is in the driving scenario included in the navigation route, the user can learn and understand the scenario in advance by viewing the scenario data corresponding to the scenario to avoid the same dangerous accident from happening again. Specifically, first, the driving navigation information input by the usermay be acquired, secondly, the driving navigation information may be sent to the cloud server, so that the cloud server determines the driving path of the first vehicle according to the driving navigation information, and in a case where the driving path includes a preset driving scenario, the cloud server may send a second scenario identifier corresponding to the preset driving scenario to the first vehicle.

The second scenario identifier may be identification information of the preset driving scenario set in advance, and the identification information may include, for example, position information, name information, scenario content, scenario identifiers (suchas dangerous driving, emergency condition, driving accident, etc.) of the preset driving scenario.

According to the above method, by receiving the first scenario data corresponding to the target driving scenario and sent by the cloud server, and parsing and presenting the first scenario data in the first vehicle, the user can directly experience and practice in the first vehicle without going to fixed locations to experience and practice, and without being limited by the fixed locations. Meanwhile, by simulatingthe driving environment by the scenario experience apparatus inside the first vehicle, the user can experience simulated driving in a real driving space, and the user experience immersion is further enhanced.

FIG. 4 is a flowchart of a driving simulation method according to an exemplary example, the method is applied to a cloud server, and as shown in FIG. 4, the method may include the following steps.

In step S201, the first scenario data correspondingto the target driving scenario are sent to the first vehicle.

In this way, the first vehicle parses the first scenario data and presents the parsed first scenario data.

In this step, in a case where the first scenario identifier sent by the first vehicle is received, the target driving scenario corresponding to the first scenario identifier is determined according to the first scenario identifier, and the first scenario data corresponding to the target driving scenario are acquired from the database of the cloud server and the first scenario data are sent to the first vehicle.

In step S202, in a case where the driving operation sent by the first vehicle is received, the driving state of the virtual vehicle in the target driving scenario is controlled according to the driving operation and the first scenario data, and the driving environment is simulated by the scenario experience apparatus of the first vehicle.

The driving operation is the driving operation acquired by the first vehicle and triggered by a user according to the first scenario data presented by the first vehicle.

The virtual vehicle may be determined according to the received target vehicle sent by the first vehicle. In a case where the target driving scenario includes a plurality of candidate vehicles, the target vehicle is the vehicle determined by the user from the plurality of candidate vehicles and acquired by the first vehicle. For example, the target vehicle may be used as the virtual vehicle in the target driving scenario.

In order to continuously improve the scenario data stored in the database of the cloud server, the scenario data of the corresponding driving scenario may be generated by the scenario information acquired from each vehicle during the actual driving process. Specifically, it can be achieved by the following steps.

Step A. The first motion data, the first environment perception data, the second motion data, and the second environment perception data sent by the first vehicle are received.

The first motion data are the motion data of the first vehicle within the first preset time before the target timestamp acquired from the history record by the first vehicle in a case where the first scenario information acquisition instruction is triggered; the first environment perception data are the environment perception data of the first vehicle within the first preset time before the target timestamp acquired from the history record by the first vehicle in a case where the first scenario information acquisition instruction is triggered; the second motion data are the motion data of the first vehicle within the second preset time after the target timestamp acquired by the first vehicle; the second environment perception data are the environment perception data of the first vehicle within the second preset time after the target timestamp acquired by the first vehicle.

Step B. The second scenario data of the corresponding driving scenario are generated according to the first motion data, the first environment perception data, the second motion data, and the second environment perception data.

For example, vehicle dynamics modeling and three-dimensional scenario modeling may be performed on the driving scenario according to the first motion data, the first environment perception data, the second motion data, and the second environment perception data to obtain a modeled three-dimensional model. Render processing is performed on the modeled three-dimensional model to obtain the second scenario data ofthe driving scenario. The vehicle dynamics modeling, and the three-dimensional scenario modeling can be realized by modeling methods in related art. The modeling algorithms corresponding to the vehicle dynamics modeling and the three-dimensional scenario modeling may be stored in the memory ofthe cloud server in advance, so that in a case where the first motion data, the first environment perception data, the second motion data, and the second environment perception data are received, the corresponding modeling algorithms may be called out from the memory, and the vehicle dynamics modeling and the three-dimensional scenario modeling may be performed on the driving scenario. In addition, the generated second scenario data may be stored in the database of the cloud server.

In order to achieve a better modeling effect, the scenario information from multiple different vehicle viewing angles is often needed in the modeling process. Therefore, in the example, if the first vehicle and the second vehicle simultaneously acquire the scenario information (for example, the motion data and the environment perception data) of the same scenario, and the acquired scenario information is sent to the cloud server, the cloud server may perform modeling according to the scenario data uploaded by the first vehicle and the second vehicle.

The first vehicle and the second vehicle simultaneously acquire the scenario information of the same scenario, which includes the following three cases. Case 1. In a case where the first vehicle triggers the first scenario information acquisition instruction by the active triggering method, sends the second scenario joint acquisition request to the second vehicle, and the second vehicle triggers the permission instruction for responding to the second scenario joint acquisition request. At this time, the first vehicle and the second vehicle will simultaneously acquire the scenario information of the scenario. Case 2. The second vehicle triggers the second scenario information acquisition instruction by the active triggering method, sends the first scenario joint acquisition request to the first vehicle, and the first vehicle triggers the permission instruction for responding to the first scenario joint acquisition request. At this time, the first vehicle and the second vehicle will simultaneously acquire the scenario information of the scenario. Case 3. The first vehicle and the second vehicle respectively receive the third scenario joint acquisition request sent by the third vehicle, and both trigger the permission instruction for responding to the third scenario joint acquisition request. At this time, the first vehicle and the second vehicle will simultaneously acquire the scenario information of the scenario. The third vehicle is another vehicle other than the second vehicle within a preset range of the position of the first vehicle.

For example, in a case where the first motion data, the first environment perception data, the second motion data, and the second environment perception data sent by the first vehicle are received, if the third motion data, the third environment perception data, the fourth motion data, and fourth environment perception data sent by the second vehicle are received, time alignment processing is performed on the first motion data, the first environment perception data, the second motion data, the second environment perception data, the third motion data, the third environment perception data, the fourth motion data, and the fourth environment perception data to obtain the first vehicle data of the first vehicle and the second vehicle data of the second vehicle; the starting time and the ending time of the first vehicle data and the second vehicle data are the same; and third scenario data of the driving scenario are generated according to the first vehicle data and the second vehicle data.

The third motion data are the motion data of the second vehicle within the third preset time before the target timestamp acquired from the history record by the second vehicle; the third environment perception data are the environment perception data of the second vehicle within the third preset time before the target timestamp acquired from the history record by the second vehicle; the fourth motion data are the motion data ofthe second vehicle within the fourth preset time after the target timestamp acquired by the second vehicle; the fourth environment perception data are the environment perception data of the second vehicle within the fourth preset time after the target timestamp acquired by the second vehicle.

In orderto ensure the modeling effect and avoid occupying the resources of the cloud server, the modeling effect of the scenario information can also be estimated before modeling, so that the modeling is performed when the modeling effect satisfies the preset effect. Specifically, first, it is determined whether the modeling effect of the driving scenario satisfies the preset effect according to the first vehicle data and the second vehicle data; and the third scenario data of the driving scenario are generated according to the first vehicle data and the second vehicle data, which includes: in a case where it is determined that the modeling effect satisfies the preset effect, the third scenario data of the driving scenario are generated according to the first vehicle data and the second vehicle data.

The determining whether the modeling effect of the driving scenario satisfies the preset effect includes: a time difference between the starting time and the ending time is determined, and in a case where the time difference is greater than or equal to a preset time difference, it is determined that the modeling effect of the driving scenario satisfies the preset effect; or, a first number of acquisition viewing angles of the first vehicle and a second number of acquisition viewing angles of the second vehicle are determined according to the first vehicle data and the second vehicle data, and in a case where the first number of acquisition viewing angles is greater than or equal to a preset number of acquisition viewing angles and the second number of acquisition viewing angles is greater than or equal to a preset number of acquisition viewing angles, it is determined that the modeling effect of the driving scenario satisfies the preset effect.

the first number of the acquisition viewing angles is the number of the image and video acquisition devices on the first vehicle and the second number of acquisition viewing angles is number of the image and video acquisition devices on the second vehicle.

It should be noted that if the cloud server only receives the first motion data, the first environment perception data, the second motion data, and the second environment perception data sent by the first vehicle, the cloud server may determine the first number of acquisition viewing angles of the first vehicle according to the first motion data, the first environment perception data, the second motion data, and the second environment perception data, and further analyze whether the preset effect is satisfied. Similarly, if the cloud service receives the scenario data (the motion data and the environment perception data) sent by a plurality of vehicles, the cloud service may determine the number of acquisition viewing angles of each vehicle according to the scenario data, and further analyze whether the number of acquisition viewing angles of each vehicle satisfies the preset effect.

In addition, if it is determined that the modeling effect of the driving scenario does not satisfy the preset effect, the scenario information that does not satisfy the preset effect can be discarded, and is not further used for scenario modeling to avoid occupying the running space of the cloud server and causing waste of resources. Alternatively, the scenario information may be temporarily stored in the memory of the cloud server, and later, the scenario data of the driving scenario may be acquired and supplemented by manual intervention, and then the driving scenario is reconstructed or corrected according to the supplemented scenario information.

In order to further improve the user experience, the generated second scenario data may be marked in the preset electronic map to facilitate the user's query and use. Specifically, since the first environment perception data and the second environment perception data include the first position information of the first vehicle, the third scenario identifier of the traveling scenario may be obtained by labeling the driving scenario after the second scenario data of the driving scenario is generated. Then, the third scenario identifier may be marked at the position corresponding to the first position information in the preset electronic map. According to the position information of each different driving scenario, the scenario identifier corresponding to the driving scenario is marked in the preset electronic map.

If the driving navigation information sent by the first vehicle is received, a driving path of the first vehicle is determined according to the driving navigation information. In a case where the driving path includes the preset driving scenario, the second scenario identifier corresponding to the preset driving scenario is sent to the first vehicle for the first vehicle to present the second scenario identifier. In this way, the second scenario identifier in the driving path corresponding to the driving navigation information can be pushed to the user in real time according to the driving navigation information of the first vehicle, so that the user can select the driving scenario that needs to be played or experienced according to the displayed second scenario identifier.

According to the above method, by receiving the first scenario data corresponding to the target driving scenario and sent by the cloud server, and parsing and presenting the first scenario data in the first vehicle, the user can directly experience and practice in the first vehicle without going to fixed locations to experience and practice, and without being limited by the fixed locations. Meanwhile, by simulatingthe driving environment by the scenario experience apparatus inside the first vehicle, the user can experience simulated driving in a real driving space, and the user experience immersion is further enhanced.

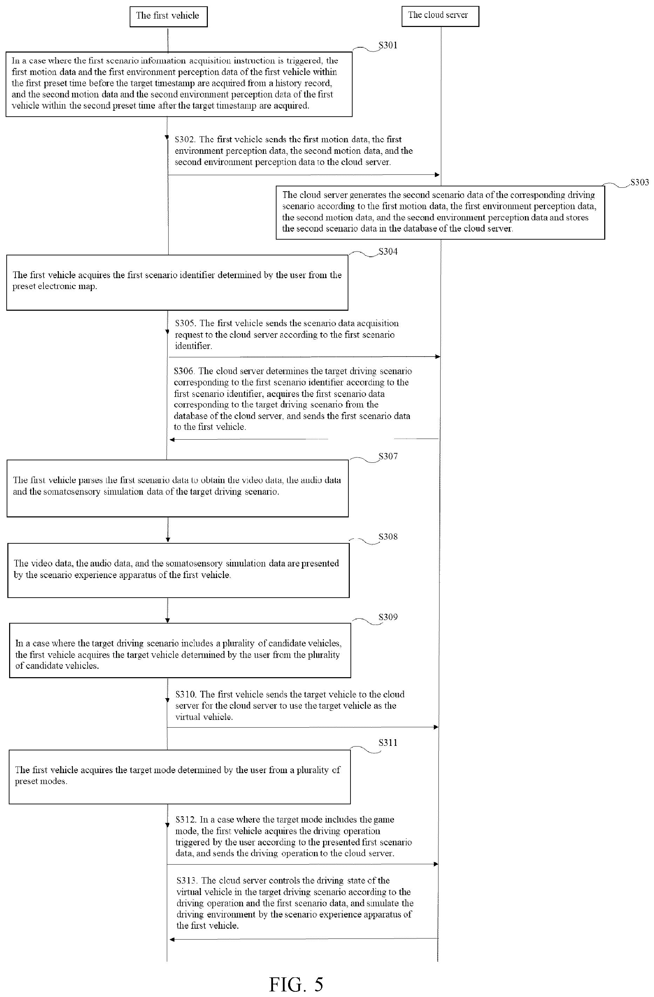

FIG. 5 is a flowchart of a driving simulation method according to an exemplary example, taking the first vehicle sending the first motion data, the first environment perception data, the second motion data, and the second environment perception data to the cloud server as an example, and as shown in FIG. 5, the method may include the following steps.

In step S301, in a case where the first scenario information acquisition instruction is triggered, the first motion data and the first environment perception data of the first vehicle within the first presettime before the target timestamp are acquired from a history record by the first vehicle, and the second motion data and the second environment perception data of the first vehicle within the second preset time after the target timestamp are acquired by the first vehicle.

The first scenario information acquisition instruction is triggered by the active triggering method or the passive triggering method.

In step S302, the first vehicle sends the first motion data, the first environment perception data, the second motion data, and the second environment perception data to the cloud server.

In step S303, the cloud server generates the second scenario data of the corresponding driving scenario according to the first motion data, the first environment perception data, the second motion data, and the second environment perception data and stores the second scenario data in the database of the cloud server.

In step S304, the first vehicle acquires the first scenario identifier determined by the user from the preset electronic map.

In step S305, the first vehicle sends the scenario data acquisition request to the cloud server according to the first scenario identifier.

In step S306, the cloud server determines the target driving scenario corresponding to the first scenario identifier according to the first scenario identifier, acquires the first scenario data corresponding to the target driving scenario from the database of the cloud server, and sends the first scenario data to the first vehicle.

In step S307, the first vehicle parses the first scenario data to obtain the video data, the audio data and the somatosensory simulation data of the target driving scenario.

In step S308, the video data, the audio data, and the somatosensory simulation data are presented by the scenario experience apparatus of the first vehicle.

In step S309, in a case where the target driving scenario includes a plurality of candidate vehicles, the first vehicle acquires the target vehicle determined by the user from the plurality of candidate vehicles.

In step S310, the first vehicle sends the target vehicle to the cloud server for the cloud server to use the target vehicle as the virtual vehicle.

In step S311, the first vehicle acquires the target mode determined by the user from a plurality of preset modes.

In step S312, in a case where the target mode includes the game mode, the first vehicle acquires the driving operation triggered by the user according to the presented first scenario data, and sends the driving operation to the cloud server.

In step S313, the cloud server controls the driving state of the virtual vehicle in the target driving scenario according to the driving operation and the first scenario data, and simulates the driving environment by the scenario experience apparatus of the first vehicle.

According to the above method, by receiving the first scenario data corresponding to the target driving scenario and sent by the cloud server, and parsing and presenting the first scenario data in the first vehicle, the user can more conveniently experience and practice in the first vehicle without being limited by the fixed place. Meanwhile, by simulating the driving environment by the scenario experience apparatus inside the first vehicle, the user can experience simulated driving in a real driving space, and the user experience immersion is further enhanced.

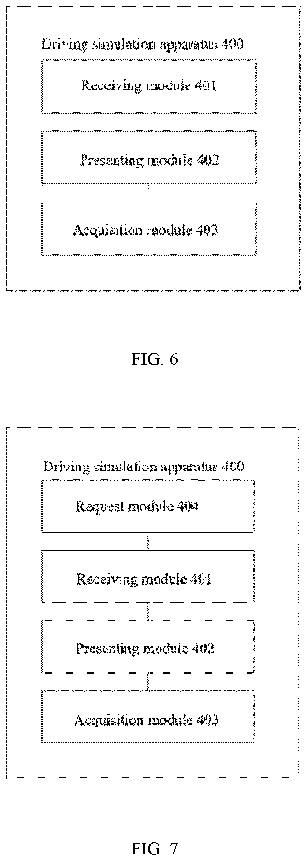

FIG. 6 is a block diagram of a driving simulation apparatus according to an exemplary example, the driving simulation apparatus is applied to a first vehicle including a scenario experience apparatus, and as shown in FIG. 6, the driving simulation apparatus 400 includes: a receiving module 401 configured to receive first scenario data corresponding to a target driving scenario and sent by a cloud server; a presenting module 402 configured to parse the first scenario data and present the parsed first scenario data; an acquisition module 403 configured to acquire a driving operation triggered by a user according to the presented first scenario data, send the driving operation to the cloud server, and the driving operation configured to instruct the cloud server to control a driving state of a virtual vehicle in the target driving scenario according to the driving operation and the first scenario data and simulate a driving environment by the scenario experience apparatus.

In an example, the presenting module 402 is configured to parse the first scenario data to obtain video data, audio data and somatosensory simulation data of the target driving scenario; and present the video data, the audio data, and the somatosensory simulation data by the scenario experience apparatus.

In an example, the scenario experience apparatus includes a plurality of window display components, an audio playback component and a somatosensory simulation component; and the presenting module 402 is configured to display the video data by the plurality of window display components and play the audio data by the audio playback component and execute the somatosensory simulation data by the somatosensory simulation component.

In an example, the acquisition module 403 is further configured to acquire a first scenario identifier determined by the user from a preset electronic map; the acquisition module 403 is further configured to send a scenario data acquisition request to the cloud server according to the first scenario identifier; and the scenario data acquisition request is configured to request the cloud server to acquire the first scenario data of the target driving scenario corresponding to the first scenario identifier.

In an example, the acquisition module 403 is further configured to acquire a target mode determined by the user from a plurality of preset modes; and the acquisition module 403 is configured to acquire the driving operation triggered by the user according to the presented first scenario data and send the driving operation to the cloud server in a case where the target mode includes a game mode.

In an example, the acquisition module 403 is further configured to, in a case where the target driving scenario includes a plurality of candidate vehicles, acquire a target vehicle determined by the user from the plurality of candidate vehicles; and send the target vehicle to the cloud server for the cloud server to use the target vehicle as the virtual vehicle.

In an example, the acquisition module 403 is further configured to acquire first motion data and first environment perception data of the first vehicle within a first preset time before a target timestamp from a history record in a case where a first scenario information acquisition instruction is triggered; and acquire second motion data and second environment perception data of the first vehicle within a second preset time after the target timestamp; and send the first motion data, the first environment perception data, the second motion data, and the second environment perception data to the cloud server for the cloud server to generate second scenario data of the corresponding driving scenario according to the first motion data, the first environment perception data, the second motion data, and the second environment perception data.

In an example, the first scenario information acquisition instruction is triggered by the following methods: an active triggering method or a passive triggering method; the active triggering method includes the user triggering the first scenario information acquisition instruction; or, in a case where the first vehicle triggers a collision signal, triggering the first scenario information acquisition instruction; the passive triggering method includes, in a case where a second vehicle sends a first scenario joint acquisition request to the first vehicle, triggering the first scenario information acquisition instruction if the user triggers a permission instruction for responding to the first scenario joint acquisition request, wherein the second vehicle is the vehicle located within a preset range of the position of the first vehicle; and the first scenario joint acquisition request is configured to request the first vehicle to acquire the first motion data, the first environment perception data, the second motion data, and the second environment perception data.

In an example, as shown in FIG. 7, the apparatus 400 further includes: a request module 404 configured to send a second scenario joint acquisition request to the second vehicle in a case where the first scenario information acquisition instruction is triggered by the active triggering method; wherein the second scenario joint acquisition request is configured to request the second vehicle to acquire third motion data and third environment perception data of the second vehicle within a third preset time before the target timestamp, and fourth motion data and fourth environment perception data of the second vehicle within a fourth preset time after the target timestamp.

In an example, in a case where the first scenario information acquisition instruction is triggered by the active triggering method, the target timestamp includes the current time; and in a case where the first scenario information acquisition instruction is triggered by the passive triggering method, the target timestamp includes the time when the second vehicle triggers the first scenario joint acquisition request.

In an example, the acquisition module 403 is further configured to acquire driving navigation information input by the user; send the driving navigation information to the cloud server for the cloud server to determine a driving path of the first vehicle according to the driving navigation information, and send a second scenario identifier corresponding to the preset driving scenario to the first vehicle in a case where the driving path includes the preset driving scenario.

With regard to the apparatus in the above examples, the specific manner in which each module performs operations has been described in detail in the examples of the method in FIGS. 1 to 3, and will not be described in detail here.

According to the above apparatus, by receiving the first scenario data corresponding to the target driving scenario and sent by the cloud server, and parsing and presenting the first scenario data in the first vehicle, the user can directly experience and practice in the first vehicle without going to fixed locations to experience and practice, and without being limited by the fixed locations. Meanwhile, by simulatingthe driving environment by the scenario experience apparatus inside the first vehicle, the user can experience simulated driving in a real driving space, and the user experience immersion is further enhanced.

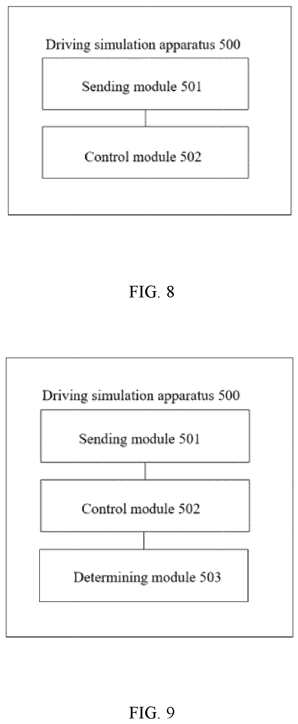

FIG. 8 is a block diagram of a driving simulation apparatus according to an exemplary example; the driving simulation apparatus is applied to a cloud server, and as shown in FIG. 8, the driving simulation apparatus 500 includes: a sending module 501 configured to send the first scenario data corresponding to the target driving scenario to the first vehicle for the first vehicle to parse the first scenario data and present the parsed first scenario data; and a control module 502 configured to, in a case where the driving operation sent by the first vehicle is received, control a driving state of a virtual vehicle in the target driving scenario according to the driving operation and the first scenario data, and simulate the driving environment by the scenario experience apparatus of the first vehicle; and the driving operation being the driving operation acquired by the first vehicle and triggered by the user according to the first scenario data presented by the first vehicle.

In an example, the sending module 501 is configured to receive the first scenario identifier sent by the first vehicle; determine the target driving scenario corresponding to the first scenario identifier according to the first scenario identifier; acquire the first scenario data corresponding to the target driving scenario; and send the first scenario data to the first vehicle.

In an example, as shown in FIG. 9, the apparatus 500 further includes: a determining module 503 configured to receive the target vehicle sent by the first vehicle; in a case where the target driving scenario includes a plurality of candidate vehicles, the target vehicle being the vehicle determined by the user from the plurality of candidate vehicles and acquired by the first vehicle; and use the target vehicle as the virtual vehicle in the target driving scenario.

In an example, the determining module 503 is further configured to receive the first motion data, the first environment perception data, the second motion data, and the second environment perception data sent by the first vehicle; wherein the first motion data are the motion data of the first vehicle within the first preset time before the target timestamp acquired from the history record by the first vehicle in a case where the first scenario information acquisition instruction is triggered; the first environment perception data are the environment perception data of the first vehicle within the first preset time before the target timestamp acquired from the history record by the first vehicle in a case where the first scenario information acquisition instruction is triggered; the second motion data are the motion data of the first vehicle within the second preset time after the target timestamp acquired by the first vehicle; the second environment perception data are the environment perception data of the first vehicle within the second preset time after the target timestamp acquired by the first vehicle; and generate second scenario data of the corresponding driving scenario according to the first motion data, the first environment perception data, the second motion data, and the second environment perception data.

In an example, the determining module 503 is configured to perform vehicle dynamics modeling and three-dimensional scenario modeling on the driving scenario according to the first motion data, the first environment perception data, the second motion data, and the second environment perception data to obtain a modeled three-dimensional model; and perform render processing on the modeled three-dimensional model to obtain the second scenario data of the driving scenario.

In an example, the determining module 503 is further configured to, in a case where the first motion data, the first environment perception data, the second motion data, and the second environment perception data sent by the first vehicle are received, if the third motion data, the third environment perception data, the fourth motion data, and the fourth environment perception data sent by the second vehicle are received, perform time alignment processing on the first motion data, the first environment perception data, the second motion data, the second environment perception data, the third motion data, the third environment perception data, the fourth motion data, and the fourth environment perception data to obtain the first vehicle data of the first vehicle and the second vehicle data of the second vehicle; the starting time and the ending time of the first vehicle data and the second vehicle data being the same; and generate third scenario data of the driving scenario according to the first vehicle data and the second vehicle data.

In an example, the determining module 503 is further configured to determine whether a modeling effect of the driving scenario satisfies a preset effect according to the first vehicle data and the second vehicle data; and the determining module 503 is further configured to generate the third scenario data of the driving scenario according to the first vehicle data and the second vehicle data in a case where it is determined that the modeling effect satisfies the preset effect.

In an example, the determining module 503 is configured to determine a time difference between the starting time and the ending time, and determine that the modeling effect of the driving scenario satisfies the preset effect in a case where the time difference is greater than or equal to a preset time difference; or, determine a first number of acquisition viewing angles of the first vehicle and a second number of acquisition viewing angles of the second vehicle according to the first vehicle data and the second vehicle data, and determine that the modeling effect of the driving scenario satisfies the preset effect in a case where the first number of the acquisition viewing angles is greater than or equal to a preset number of acquisition viewing angles and the second number of acquisition viewing angles is greater than or equal to the preset number of acquisition viewing angles.

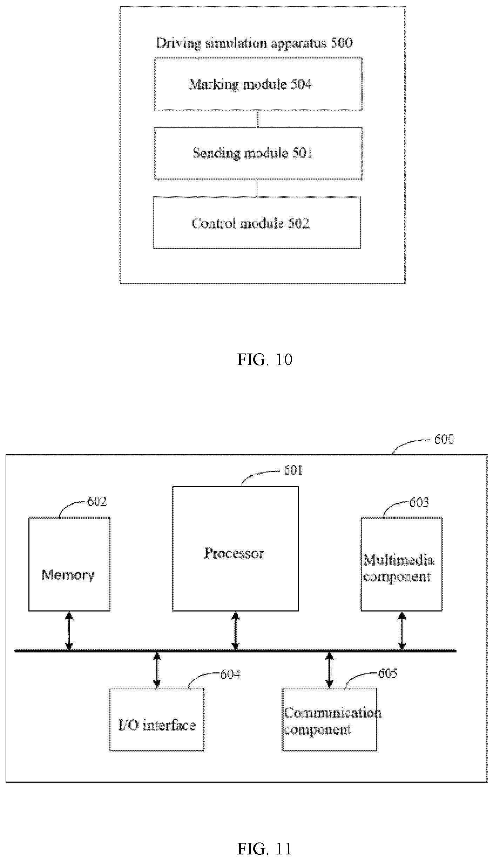

In an example, the first environment perception data and the second environment perception data include first position information of the first vehicle, and as shown in FIG. 10, the apparatus 500 further includes: a marking module 504 configured to label the driving scenario to obtain a third scenario identifier of the driving scenario after generating the second scenario data ofthe driving scenario; and mark the third scenario identifier at the position corresponding to the first position information in the preset electronic map.

In an example, the determining module 503 is further configured to receive the driving navigation information sent by the first vehicle; and determine the driving path of the first vehicle according to the driving navigation information; and the sending module 501 is further configured to send the second scenario identifier corresponding to the preset driving scenario to the first vehicle for the first vehicle to present the second scenario identifier in a case where the driving path includes the preset driving scenario.

With regard to the apparatus in the above examples, the specific manner in which each module performs operations has been described in detail in the examples of the method in FIG. 4, and will not be described in detail here.

According to the above apparatus, by receiving the first scenario data corresponding to the target driving scenario and sent by the cloud server, and parsing and presenting the first scenario data in the first vehicle, the user can directly experience and practice in the first vehicle without going to fixed locations to experience and practice, and without being limited by the fixed locations. Meanwhile, by simulatingthe driving environment by the scenario experience apparatus inside the first vehicle, the user can experience simulated driving in a real driving space, and the user experience immersion is further enhanced.

FIG. 11 is a block diagram of an electronic device 600 according to an exemplary example. As shown in FIG. 11, the electronic device 600 may include a processor 601 and a memory 602. The electronic device 600 may also include one or more of a multimedia component 603, an input/output (I/O) interface 604, and a communication component 605.

The processor 601 is configured to control the overall operation of the electronic device 600 to complete all or part of the steps of the driving simulation method described above. The memory 602 is configured to store various types of data to support the operations on the electronic device 600, the data may include, for example, instructions for any application or method operated on the electronic device 600, as well as application-related data, such as contact data, messages sent and received, pictures, audio, video, etc.. The memory 602 may be implemented by any type of volatile or non-volatile storage device or a combination thereof, such as a Static Random Access Memory (SRAM), an Electrically Erasable Programmable Read-Only Memory (EEPROM), an Erasable Programmable Read-Only Memory (EPROM), Programmable Read-Only Memory (PROM), Read-Only Memory (ROM), magnetic memory, flash memory, magnetic disk or optical disk. The multimedia component 603 may include a screen and an audio component. The screen may be a touch screen, the audio componentis configured to output and/or input audio signals. For example, the audio component may include a microphone for receiving external audio signals. The received audio signal may be further stored in the memory 602 or sent by the communication component 605. The audio component further includes at least one loudspeaker for outputting the audio signals. The I/O interface 604 provides an interface between the processor 601 and other interface modules which may be a keyboard, a mouse, a button, etc.. These buttons may be virtual buttons or physical buttons. The communication component 605 is configured for wired or wireless communication between the electronic device 600 and other devices. Wireless communications, such as Wi-Fi, Bluetooth, Near Field Communication (NFC), 2G, 3G, 4G, NB-IOT, eMTC, or other 5G, etc., or a combination of one or more thereof, are not limited herein. Accordingly, the corresponding communication component 605 may include a Wi-Fi module, a Bluetooth module, an NFC module, etc..

In an exemplary example, the electronic device 600 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, microcontrollers, microprocessors, or other electronic components for performing the driving simulation method described above.

In another exemplary example, provided is a computer-readable storage medium including program instructions which, when executed by a processor, implement the steps of the driving simulation method described above. For example, the computer-readable storage medium may be the memory 602 including the program instructions executable by the processor 601 of the electronic device 600 to complete the driving simulation method described above.

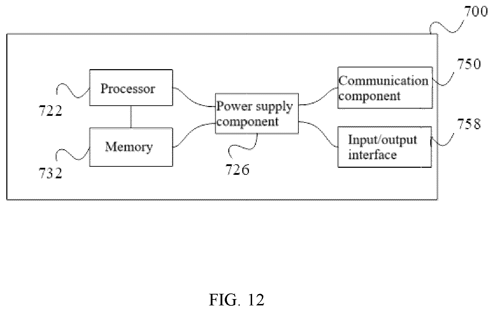

FIG. 12 is a block diagram of another electronic device 700 according to an exemplary example. For example, the electronic device 700 may be provided as a server. Referring to FIG. 12, the electronic device 700 includes one or more processors 722, and a memory 732 configured to store a computer program executable by the processor 722. The computer program stored in the memory 732 may include one or more modules each corresponding to a set of instructions. Further, the processor 722 may be configured to execute the computer program to execute the driving simulation method described above.

In addition, the electronic device 700 may further include a power supply component 726 and a communication component 750, the power supply component 726 may be configured to perform power management of the electronic device 700, and the communication component 750 may be configured to enable communication of the electronic device 700, such as wired or wireless communication. The electronic device 700 may further include an input/output (I/O) interface 758. The electronic device 700 may operate based on an operating system stored in the memory 732.

In another exemplary example, provided is a computer-readable storage medium including program instructions which, when executed by a processor, implement the steps of the driving simulation method described above. For example, the non-transitory computer-readable storage medium may be the memory 732 including the program instructions executable by the processor 722 of the electronic device 700 to complete the driving simulation method described above.

In another exemplary example, provided is a computer program product including a computer program executable by a programmable device, and the computer program has a code portion for performing the driving simulation method described above when executed by the programmable device.

The example also provides a vehicle including the driving simulation apparatus 400 provided in FIGS. 6 and 7.

The example also provides a cloud server including the driving simulation apparatus 500 provided in FIGS. 8 to 10.

The preferred examples of the present disclosure have been described in detail above with reference to the accompanying drawings, but the present disclosure is not limited to the specific details of the examples, and various simple modifications can be made to the technical solutions of the present disclosure within the scope of the technical concept of the present disclosure, and these simple modifications all fall within the scope of protection of the present disclosure.

In addition, it should be noted that the specific technical features described in the examples may be combined in any suitable manner without contradiction, and in order to avoid unnecessary repetition, various possible combinations will not be described in the present disclosure.

In addition, the various examples of the present disclosure may be arbitrarily combined, and the combinations should be regarded as the contents disclosed in the present disclosure as long as they do not violate the concept of the present disclosure.

## Claims

1. A driving simulation method, applied to a first vehicle which comprises a scenario experience apparatus, the method comprising:
receiving first scenario data corresponding to a target driving scenario and sent by a cloud server;
parsing the first scenario data and presenting the parsed first scenario data;
acquiring a driving operation triggered by a user according to the presented first scenario data, sending the driving operation to the cloud server,
the driving operation being configured to instruct the cloud server to control a driving state of a virtual vehicle in the target driving scenario according to the driving operation and the first scenario data and simulate a driving environment by the scenario experience apparatus.

2. The method according to claim 1, wherein the parsing the first scenario data and presenting the parsed first scenario data comprises:
parsing the first scenario data to obtain video data, audio data and somatosensory simulation data of the target driving scenario; and
presenting the video data, the audio data, and the somatosensory simulation data by the scenario experience apparatus.

3. The method according to claim 2, wherein the scenario experience apparatus comprises a plurality of window display components, an audio playback component and a somatosensory simulation component; and the presenting the video data, the audio data, and the somatosensory simulation data by the scenario experience apparatus comprises:
displaying the video data by the plurality of window display components and playing the audio data by the audio playback component and executing the somatosensory simulation data by the somatosensory simulation component.

4. The method according to any one of claims 1 to 3, before receiving the first scenario data corresponding to the target driving scenario and sent by the cloud server, further comprising:
acquiring a first scenario identifier determined by the user from a preset electronic map;
sending a scenario data acquisition requestto the cloud server according to the first scenario identifier; and the scenario data acquisition request being configured to request the cloud server to acquire the first scenario data of the target driving scenario corresponding to the first scenario identifier.

5. The method according to any one of claims 1 to 4, further comprising:
acquiring a target mode determined by the user from a plurality of preset modes; and
acquiring the driving operation triggered by the user according to the presented first scenario data, and sending the driving operation to the cloud server comprising:
in a case where the target mode comprises a game mode, acquiring the driving operation triggered by the user according to the presented first scenario data, and sending the driving operation to the cloud server.

6. The method according to any one of claims 1 to 5, further comprising:
in a case where the target driving scenario comprises a plurality of candidate vehicles, acquiring a target vehicle determined by the user from the plurality of candidate vehicles; and
sending the target vehicle to the cloud server for the cloud server to use the target vehicle as the virtual vehicle.

7. The method according to any one of claims 1 to 6, further comprising:
in a case where a first scenario information acquisition instruction is triggered, acquiring first motion data and first environment perception data of the first vehicle within a first preset time before a target timestamp from a history record;
acquiring second motion data and second environment perception data of the first vehicle within a second preset time after the target timestamp; and
sending the first motion data, the first environment perception data, the second motion data, and the second environment perception data to the cloud server for the cloud server to generate second scenario data of the corresponding driving scenario according to the first motion data, the first environment perception data, the second motion data, and the second environment perception data.

8. The method according to claim 7, wherein the first scenario information acquisition instruction is triggered by the following methods:
an active triggering method or a passive triggering method;
the active triggering method comprises the user triggering the first scenario information acquisition instruction; or, in a case where the first vehicle triggers a collision signal, triggering the first scenario information acquisition instruction;
the passive triggering method comprises, in a case where a second vehicle sends a first scenario joint acquisition request to the first vehicle, triggering the first scenario information acquisition instruction if the user triggers a permission instruction for responding to the first scenario joint acquisition request; the second vehicle is the vehicle located within a preset range of the position of the first vehicle; and the first scenario joint acquisition request is configured to request the first vehicle to acquire the first motion data, the first environment perception data, the second motion data, and the second environment perception data.

9. The method according to claim 8, further comprising:
in a case where the first scenario information acquisition instruction is triggered by the active triggering method, sending a second scenario joint acquisition request to the second vehicle;
wherein the second scenario joint acquisition request is configured to request the second vehicle to acquire third motion data and third environment perception data of the second vehicle within a third preset time before the target timestamp, and fourth motion data and fourth environment perception data of the second vehicle within a fourth preset time after the target timestamp.

10. The method according to claim 8 or 9, wherein in a case where the first scenario information acquisition instruction is triggered by the active triggering method, the target timestamp comprises the current time; and
in a case where the first scenario information acquisition instruction is triggered by the passive triggering method, the target timestamp comprises the time when the second vehicle triggers the first scenario joint acquisition request.

11. The method according to any one of claims 1 to 10, further comprising:
acquiring driving navigation information input by the user;
sending the driving navigation information to the cloud server for the cloud server to determine a driving path of the first vehicle according to the driving navigation information, and in a case where the driving path comprises a preset driving scenario, sending a second scenario identifier corresponding to the preset driving scenario to the first vehicle.

12. A driving simulation method, applied to a cloud server, the method comprising:
sending first scenario data corresponding to a target driving scenario to a first vehicle for the first vehicle to parse the first scenario data and present the parsed first scenario data;
and in a case where a driving operation sent by the first vehicle is received, controlling a driving state of a virtual vehicle in the target driving scenario according to the driving operation and the first scenario data, and simulating a driving environment by a scenario experience apparatus of the first vehicle; and the driving operation being the driving operation acquired by the first vehicle and triggered by a user according to the first scenario data presented by the first vehicle.

13. The method according to claim 12, wherein sending first scenario data corresponding to the target driving scenario to the first vehicle comprises:
receiving a first scenario identifier sent by the first vehicle;
determining the target driving scenario corresponding to the first scenario identifier according to the first scenario identifier;
acquiring the first scenario data corresponding to the target driving scenario; and
sending the first scenario data to the first vehicle.

14. The method according to claim 12 or 13, further comprising:
receiving a target vehicle sent by the first vehicle; in a case where the target driving scenario comprises a plurality of candidate vehicles, the target vehicle being the vehicle determined by the user from the plurality of candidate vehicles and acquired by the first vehicle;
and using the target vehicle as the virtual vehicle in the target driving scenario.

15. The method according to any one of claims 12 to 14, further comprising:
receiving first motion data, first environment perception data, second motion data, and second environment perception data sent by the first vehicle;
wherein the first motion data are the motion data of the first vehicle within a first preset time before a target timestamp acquired from a history record by the first vehicle in a case where a first scenario information acquisition instruction is triggered; the first environment perception data are the environment perception data of the first vehicle within the first preset time before the target timestamp acquired from the history record by the first vehicle in a case where the first scenario information acquisition instruction is triggered; the second motion data are the motion data of the first vehicle within a second preset time after the target timestamp acquired by the first vehicle; the second environment perception data are the environment perception data of the first vehicle within the second presettime after the targettimestamp acquired by the first vehicle; and
generating second scenario data of the corresponding driving scenario according to the first motion data, the first environment perception data, the second motion data, and the second environment perception data.

16. The method according to claim 15, wherein generating second scenario data of the corresponding driving scenario according to the first motion data, the first environment perception data, the second motion data, and the second environment perception data comprises:
performing vehicle dynamics modeling and three-dimensional scenario modeling on the driving scenario according to the first motion data, the first environment perception data, the second motion data, and the second environment perception data to obtain a modeled three-dimensional model; and
performing render processing on the modeled three-dimensional model to obtain the second scenario data of the driving scenario.

17. The method according to claim 15 or 16, further comprising:
in a case where the first motion data, the first environment perception data, the second motion data, and the second environment perception data sent by the first vehicle are received, if third motion data, third environment perception data, fourth motion data, and fourth environment perception data sent by a second vehicle are received, performing time alignment processing on the first motion data, the first environment perception data, the second motion data, the second environment perception data, the third motion data, the third environment perception data, the fourth motion data, and the fourth environment perception data to obtain first vehicle data of the first vehicle and second vehicle data of the second vehicle; the starting time and the ending time of the first vehicle data and the second vehicle data being the same; and generating third scenario data of the driving scenario according to the first vehicle data and the second vehicle data.

18. The method according to claim 17, further comprising:
determining whether a modeling effect of the driving scenario satisfies a preset effect according to the first vehicle data and the second vehicle data; and
generating third scenario data of the driving scenario according to the first vehicle data and the second vehicle data comprising:
in a case where itis determined that the modeling effect satisfies the preset effect, generating the third scenario data of the driving scenario according to the first vehicle data and the second vehicle data.

19. The method according to claim 18, wherein determining whether the modeling effect of the driving scenario satisfies the preset effect comprises:
determining a time difference between the starting time and the ending time, and in a case where the time difference is greater than or equal to a preset time difference, determining that the modeling effect of the driving scenario satisfies the preset effect; or,
determining a first number of acquisition viewing angles of the first vehicle and a second number of acquisition viewing angles of the second vehicle according to the first vehicle data and the second vehicle data, and determining that the modeling effect of the driving scenario satisfies the preset effect in a case where the first number of the acquisition viewing angles is greater than or equal to a preset number of acquisition viewing angles and the second number of acquisition viewing angles is greater than or equal to a preset number of acquisition viewing angles.

20. The method according to any one of claims 15 to 19, wherein the first environment perception data and the second environment perception data comprise first position information of the first vehicle, and the method further comprises:
after generating the second scenario data of the driving scenario, labeling the driving scenario to obtain a third scenario identifier of the driving scenario; and
marking the third scenario identifier at the position corresponding to the first position information in the preset electronic map.

21. The method according to any one of claims 12 to 20, further comprising:
receiving driving navigation information sent by the first vehicle;
determining a driving path of the first vehicle according to the driving navigation information; and
in a case where the driving path comprises a preset driving scenario, sending a second scenario identifier corresponding to the preset driving scenario to the first vehicle for the first vehicle to present the second scenario identifier.

22. A driving simulation apparatus, applied to a first vehicle comprising a scenario experience apparatus, the driving simulation apparatus comprising:
a receiving module configured to receive first scenario data corresponding to a target driving scenario and sent by a cloud server;
a presenting module configured to parse the first scenario data and present the parsed first scenario data;
an acquisition module configured to acquire a driving operation triggered by a user according to the presented first scenario data, send the driving operation to the cloud server, and the driving operation being configured to instruct the cloud server to control a driving state of a virtual vehicle in the target driving scenario according to the driving operation and the first scenario data and simulate a driving environment by the scenario experience apparatus.

23. The apparatus according to claim 22, wherein the presenting module is configured to parse the first scenario data to obtain video data, audio data and somatosensory simulation data of the target driving scenario; and present the video data, the audio data, and the somatosensory simulation data by the scenario experience apparatus.

24. The apparatus according to claim 23, wherein the scenario experience apparatus comprises a plurality of window display components, an audio playback component and a somatosensory simulation component; and the presenting module is configured to display the video data by the plurality of window display components and play the audio data by the audio playback component and execute the somatosensory simulation data by the somatosensory simulation component.

25. The apparatus according to any one of claims 22 to 24, wherein the acquisition module is further configured to acquire a first scenario identifier determined by the user from a preset electronic map;
the acquisition module is further configured to send a scenario data acquisition request to the cloud server according to the first scenario identifier; and the scenario data acquisition request is configured to request the cloud server to acquire the first scenario data of the target driving scenario corresponding to the first scenario identifier.

26. The apparatus according to any one of claims 22 to 25, wherein the acquisition module is further configured to acquire a target mode determined by the user from a plurality of preset modes; and
the acquisition module is configured to acquire the driving operation triggered by the user according to the presented first scenario data and send the driving operation to the cloud server in a case where the target mode comprises a game mode.

27. The apparatus according to any one of claims 22 to 26, wherein the acquisition module is further configured to, in a case where the target driving scenario comprises a plurality of candidate vehicles, acquire a target vehicle determined by the user from the plurality of candidate vehicles; and send the target vehicle to the cloud server for the cloud server to use the target vehicle as the virtual vehicle.

28. The apparatus according to any one of claims 22 to 27, wherein the acquisition module is further configured to acquire first motion data and first environment perception data of the first vehicle within a first preset time before a target timestamp from a history record in a case where a first scenario information acquisition instruction is triggered; and acquire second motion data and second environment perception data of the first vehicle within a second presettime after the target timestamp; and send the first motion data, the first environment perception data, the second motion data, and the second environment perception data to the cloud server for the cloud server to generate second scenario data of the corresponding driving scenario according to the first motion data, the first environment perception data, the second motion data, and the second environment perception data.

29. The apparatus according to claim 28, wherein the first scenario information acquisition instruction is triggered by the following methods:
an active triggering method or a passive triggering method;
the active triggering method comprises the user triggering the first scenario information acquisition instruction; or, in a case where the first vehicle triggers a collision signal, triggering the first scenario information acquisition instruction;
the passive triggering method comprises, in a case where a second vehicle sends a first scenario joint acquisition request to the first vehicle, triggering the first scenario information acquisition instruction if the user triggers a permission instruction for responding to the first scenario joint acquisition request; the second vehicle is the vehicle located within a preset range of the position of the first vehicle; and the first scenario joint acquisition request is configured to request the first vehicle to acquire the first motion data, the first environment perception data, the second motion data, and the second environment perception data.

30. The apparatus according to claim 29, further comprising:
a request module configured to send a second scenario joint acquisition request to the second vehicle in a case where the first scenario information acquisition instruction is triggered by the active triggering method;
wherein the second scenario joint acquisition request is configured to request the second vehicle to acquire third motion data and third environment perception data of the second vehicle within a third preset time before the target timestamp, and fourth motion data and fourth environment perception data of the second vehicle within a fourth preset time after the target timestamp.

31. The apparatus according to claim 29 or 30, wherein in a case where the first scenario information acquisition instruction is triggered by the active triggering method, the target timestamp comprises the current time; and
in a case where the first scenario information acquisition instruction is triggered by the passive triggering method, the target timestamp comprises the time when the second vehicle triggers the first scenario joint acquisition request.

32. The apparatus according to any one of claims 22 to 31, wherein the acquisition module is further configured to acquire driving navigation information input by the user; send the driving navigation information to the cloud server for the cloud server to determine a driving path of the first vehicle according to the driving navigation information, and in a case where the driving path comprises a preset driving scenario, send a second scenario identifier corresponding to the preset driving scenario to the first vehicle.

33. A driving simulation apparatus, applied to a cloud server, the driving simulation apparatus comprising:
a sending module configured to send first scenario data corresponding to a target driving scenario to a first vehicle for the first vehicle to parse the first scenario data and present the parsed first scenario data;
and a control module configured to, in a case where a driving operation sent by the first vehicle is received, control a driving state of a virtual vehicle in the target driving scenario according to the driving operation and the first scenario data, and simulate a driving environment by a scenario experience apparatusofthe firstvehicle; and the driving operation being the driving operation acquired by the first vehicle and triggered by a user according to the first scenario data presented by the first vehicle.

34. The apparatus according to claim 33, wherein the sending module is configured to receive a first scenario identifier sent by the first vehicle; determine the target driving scenario corresponding to the first scenario identifier according to the first scenario identifier; acquire the first scenario data corresponding to the target driving scenario; and send the first scenario data to the first vehicle.

35. The apparatus according to claim 33 or 34, further comprising: a determining module configured to receive a target vehicle sent by the first vehicle; in a case where the target driving scenario comprises a plurality of candidate vehicles, the target vehicle being the vehicle determined by the user from the plurality of candidate vehicles and acquired by the first vehicle; and use the target vehicle as the virtual vehicle in the target driving scenario.

36. The apparatus according to any one of claims 33 to 35, wherein the determining module is further configured to receive first motion data, first environment perception data, second motion data, and second environment perception data sent by the first vehicle; wherein the first motion data are the motion data of the first vehicle within a first preset time before a target timestamp acquired from a history record by the first vehicle in a case where a first scenario information acquisition instruction is triggered, the first environment perception data are the environment perception data of the first vehicle within the first preset time before the target timestamp acquired from the history record by the first vehicle in a case where the first scenario information acquisition instruction is triggered, the second motion data are the motion data of the first vehicle within a second preset time after the target timestamp acquired by the first vehicle, and the second environment perception data are the environment perception data of the first vehicle within the second presettime after the targettimestamp acquired by the first vehicle; and generate second scenario data of the corresponding driving scenario according to the first motion data, the first environment perception data, the second motion data, and the second environment perception data.

37. The apparatus according to claim 36, wherein the determining module is configured to perform vehicle dynamics modeling and three-dimensional scenario modeling on the driving scenario according to the first motion data, the first environment perception data, the second motion data, and the second environment perception data to obtain a modeled three-dimensional model; and perform render processing on the modeled three-dimensional model to obtain the second scenario data of the driving scenario.

38. The apparatus according to claim 36 or 37, wherein the determining module is further configured to, in a case where the first motion data, the first environment perception data, the second motion data, and the second environment perception data sent by the first vehicle are received, if third motion data, third environment perception data, fourth motion data, and fourth environment perception data sent by a second vehicle are received, perform time alignment processing on the first motion data, the first environment perception data, the second motion data, the second environment perception data, the third motion data, the third environment perception data, the fourth motion data, and the fourth environment perception data to obtain first vehicle data of the first vehicle and second vehicle data of the second vehicle; the starting time and the ending time of the first vehicle data and the second vehicle data being the same; and generate third scenario data of the driving scenario according to the first vehicle data and the second vehicle data.

39. The apparatus according to claim 38, wherein the determining module is further configured to determine whether a modeling effect of the driving scenario satisfies a preset effect according to the first vehicle data and the second vehicle data; and the determining module is further configured to generate the third scenario data of the driving scenario according to the first vehicle data and the second vehicle data in a case where it is determined that the modeling effect satisfies the preset effect.

40. The apparatus according to claim 39, wherein the determining module is configured to determine a time difference between the starting time and the ending time, and determine that the modeling effect of the driving scenario satisfies the preset effect in a case where the time difference is greater than or equal to a preset time difference; or, determine a first number of acquisition viewing angles of the first vehicle and a second number of acquisition viewing angles of the second vehicle according to the first vehicle data and the second vehicle data, and determine that the modeling effect of the driving scenario satisfies the preset effect in a case where the first number of the acquisition viewing angles is greater than or equal to a preset number of acquisition viewing angles and the second number of acquisition viewing angles is greater than or equal to a preset number of acquisition viewing angles.

41. The apparatus according to any one of claims 36 to 40, wherein the first environment perception data and the second environment perception data comprise first position information of the first vehicle, and the apparatus further comprises: a marking module configured to label the driving scenario to obtain a third scenario identifier of the driving scenario after generating the second scenario data of the driving scenario; and mark the third scenario identifier at the position corresponding to the first position information in the preset electronic map.

42. The apparatus according to any one of claims 33 to 41, wherein the determining module is further configured to receive driving navigation information sent by the first vehicle; and determine a driving path of the first vehicle according to the driving navigation information; and the sending module is further configured to, in a case where the driving path comprises a preset driving scenario, send a second scenario identifier corresponding to the preset driving scenario to the first vehicle for the first vehicle to present the second scenario identifier.

43. A vehicle comprising the driving simulation apparatus according to any one of claims 22 to 32.

44. A cloud server comprising the driving simulation apparatus according to any one of claims 33 to 42.

45. Anon-transitory computer-readable storage medium, storing a computer program which, when executed by processor, implements steps of the method according to any one of claims 1 to 11 or implements steps of the method according to any one of claims 12 to 21.
